# EUROPEAN PATENT APPLICATION

(11) **EP 1 705 157 A1**
(43) Date of publication of application: **27.09.2006**
(21) Application number: 06251489.8
(22) Date of filing: 21.03.2006
(51) Int. Cl.: C03B 37/012, G02B 6/02

(54) **Method of manufacturing microstructured optical fiber**

(30) Priority: 22.03.2005 JP 2005081440
(71) Applicant: The Furukawa Electric Co., Ltd., Chiyoda-ku Tokyo 100-8322 (JP)
(72) Inventor: Miyabe, Ryo The Furukawa Electric Co., Ltd., Tokyo 100-8322 (JP); Sugizaki, Ryuichi The Furukawa Electric Co., Ltd., Tokyo 100-8322 (JP)
(74) Representative: Nicholls, Michael John

(57) **Abstract**

A silica material 1 having a higher purity than a cylindrical preform (2) formed of a silica material is deposited on at least one of an inner side and an outer side of the preform (2) to fabricate a cylindrical intermediate member (3). A part of the cylindrical intermediate member (3) including at least a part of the preform (2) is removed to fabricate a high-purity silica tube (6). A plurality of the high-purity silica tubes (6) is bundled with a core rod (4) arranged at a center axis of a bundle of the high-purity silica tubes (6), and the bundle of the high-purity silica tubes (6) with the core rod (4) arranged at the center axis is drawn to obtain a microstructured optical fiber.

## Description

The present invention relates to a technology for manufacturing a microstructured optical fiber in which a microstructure is formed in a cladding layer.

It is possible to obtain a characteristic that cannot be obtained in the conventional optical fiber by inserting a gas such as the air having an extremely small refractive index compared with a silica glass or a liquid or a solid having a small refractive index into a coaxial layered optical fiber structure. Such a microstructured optical fiber is currently focused on and actively developed.

Forming a microstructure in an optical fiber, various optical fibers can be obtained. Examples of the optical fibers include an optical fiber that can perform a single mode operation in all wavelength bands including visible light and infrared light regions by adjusting a periodic structure of a cladding layer to shift a cutoff wavelength to a short wavelength side, an optical fiber that having a cladding formed of a silica material and a hollow core to control Rayleigh scattering to the limit, and an optical fiber having an ultra-high nonlinear characteristic by reducing a core area to the limit.

A large polarization maintaining characteristic is obtained by adjusting an arrangement of microstructures on a cross section to give structural anisotropy in a direction orthogonal to an axis or by forming a core in a noncircular shape. Besides, it is reported that a two-dimensional Bragg reflection structure can be formed by periodically arranging microstructures, which makes it possible to obtain a characteristic like a so-called photonic band-gap transmission for confining light in a core to guide the light.

As a method of manufacturing a preform of the microstructured optical fiber, a stack-and-draw method of forming a desired waveguide structure by bundling synthetic silica pipes and a method of drilling a through-hole in a glass rod manufactured by the outside vapor deposition (OVD) method or the modified chemical vapor deposition (MCVD) method using a punching jig are generally known (see, for example, Japanese Patent No. 3556908).

However, in the method using the punching jig, when there are an extremely large number of microstructures, labor for manufacturing the preform is large and a size and a structure of the preform that can be formed are limited, making a wide-ranging design of the optical fiber difficult.

The stack-and-draw method is effective in manufacturing an optical fiber including a large number of or small-diameter microstructures. However, the general synthetic silica pipe used in this method has low purity compared with a silica glass formed by the MCVD method, the OVD method, or the vapor axial deposition (VAD) method, and contains a large amount of impurities causing a transmission loss. For example, while a content of an OH group, which is a major factor of an increase in a loss of an optical fiber, is 100 parts per billion (ppb) to 1000 ppb in the general synthetic silica pipe, the content is 1 ppb to 10 ppb in the silica glass formed by the MCVD method, the OVD method, or the VAD method. Therefore, when the synthetic silica pipe is used, a transmission loss of an optical fiber obtained is also high.

It is an object of the present invention to at least solve the problems in the conventional technology.

A method of manufacturing a microstructured optical fiber according to one aspect of the present invention includes depositing a silica material having a higher purity than a cylindrical preform formed of a silica material on at least one of an inner side and an outer side of the preform to fabricate a cylindrical intermediate member; removing a part of the cylindrical intermediate member including at least a part of the preform to fabricate a high-purity silica tube; bundling a plurality of the high-purity silica tubes with a core rod arranged at a center axis of a bundle of the high-purity silica tubes; and drawing the bundle of the high-purity silica tubes with the core rod arranged at the center axis.

The invention will be further described by way of example with reference to the accompanying drawings, in which:-
Fig. 1 is a schematic for illustrating a method of removing a synthetic silica pipe after forming a silica glass layer having high purity by the MCVD method;
Fig. 2 is a schematic for illustrating a method of removing a synthetic silica pipe after forming a silica glass layer having high purity by the OVD method;
Fig. 3 is a schematic for illustrating a process in which high-purity silica tubes are bundled with a core rod and drawn;
Fig. 4 is a schematic for illustrating a process in which an outer circumferential surface of a cylindrical intermediate member is machined into a square shape in cross section;
Fig. 5 is a schematic for illustrating a process in which the outer circumferential surface of the cylindrical intermediate member is machined into a hexagonal shape in cross section; and
Fig. 6 is a schematic for illustrating a process in which the outer circumferential surface of the cylindrical intermediate member is actually machined into the hexagonal shape in cross section according to an embodiment of the present invention.

Exemplary embodiments of the present invention are explained in detail below with reference to the accompanying drawings. The present invention is not limited by the embodiments.

According to an embodiment of the present invention, a cylindrical intermediate member is manufactured by depositing silica having higher purity than a preform on an inner circumferential surface of a synthetic silica pipe serving as the preform by the MCVD method. Thereafter, a part of the synthetic silica pipe or the entire synthetic silica pipe in the cylindrical intermediate member is removed by etching by a chemical like hydrogen fluoride or machining. In this manner a high-purity silica tube can be obtained. A microstructured optical fiber having a low transmission loss is manufactured using this high-purity silica tube.

A high-purity silica tube may be obtained using a method of manufacturing a cylindrical intermediate member by depositing silica having high purity on an outer circumferential surface of a synthetic silica pipe serving as a preform by the OVD method and, then, removing the synthetic silica pipe in the same manner as the above description.

Further, a cylindrical intermediate member is manufactured by depositing silica having higher purity than a preform on an outer circumferential surface of a synthetic silica pipe serving as the preform by the OVD method and, then, the cylindrical intermediate member is scraped to have a polygonal shape as an outer sectional shape thereof. A plurality of cylindrical intermediate members are densely bundled and drawn.

The synthetic silica pipe serving as the preform may contain a dopant like fluorine or phosphorus. A silica layer deposited may also contain a dopant like fluorine or germanium.

When a core rod of an optical fiber including a cladding formed of a silica material and a hollow core is manufactured, a cylindrical intermediate member is manufactured according to the same method as above and an entire synthetic silica pipe portion of the cylindrical intermediate member is removed to form a core rod.

In the microstructured optical fiber in this embodiment, a core is formed of pure silica glass or glass doped with germanium in the center of a cross section thereof. The microstructured optical fiber has microstructures made of a group of extremely fine thin holes in a cladding layer on a cross section thereof. In the microstructured optical fiber having such a structure, it is possible to obtain special cutoff characteristic, dispersion characteristic, and nonlinear characteristic, which cannot be easily obtained by the conventional silica fiber, by changing a ratio (d/A) of a hole diameter (d) to an inter-hole distance (A). For example, it is possible to shift a cutoff wavelength to a short wavelength and obtain flat dispersion over a wide wavelength range by setting d/A within about 0.3 to 0.5. This makes it possible to obtain an optical fiber suitable for a broadband transmission line. It is possible to obtain a small effective area and large normal dispersion and obtain a characteristic suitable for a highly nonlinear fiber and a dispersion compensating fiber by setting d/A to about 0.8 to 0.9.

However, in such a microstructured optical fiber, the hole diameter is as small as the order of a wavelength of light used in these systems (about 0.5 µm to 2.0 µm) and a large number of annular holes are located to reduce a transmission loss. Thus, in general, a transmission loss is high in the conventional method in which synthetic silica pipes are used.

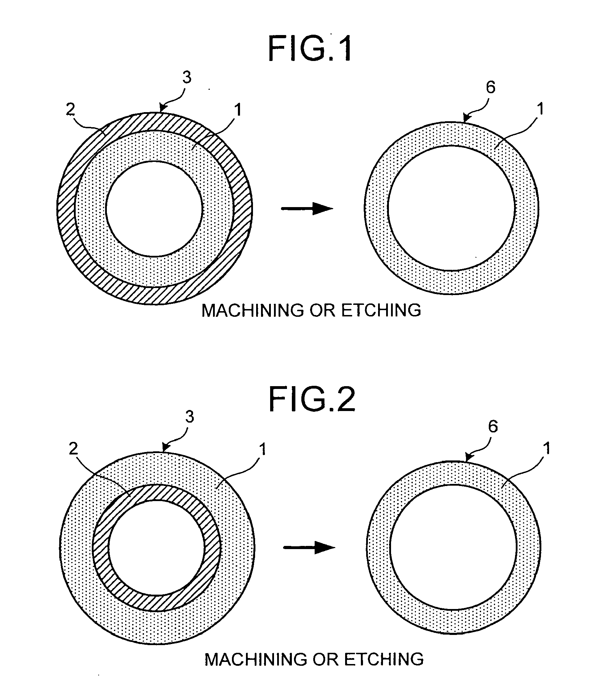

Fig. 1 is a schematic for illustrating a method of removing a synthetic silica pipe 2 after forming a silica glass layer 1 having high purity by the MCVD method. The silica glass layer 1 having high purity is formed on an inner side of the synthetic silica pipe 2 by the MCVD method to manufacture a cylindrical intermediate member 3. Alternatively, as shown in Fig. 2, the silica glass layer 1 having high purity is formed on an outer side of the synthetic silica pipe 2 by the OVD method to manufacture the cylindrical intermediate member 3.

Even if the cylindrical intermediate member 3 including synthetic silica pipe 2 is used for the micro structured fiber, average purity of the glass is improved by deposited layer and transmission loss is reduced. However, it is more desirable to remove the all part of the synthetic silica pipe 2 with etching by hydrogen fluoride or machining. Therefore, as shown in Figs. 1 and 2, the all part of the synthetic silica pipe 2 is removed and only the silica glass layer 1 having high purity is left to obtain a high-purity silica tube (cylindrical intermediate member) 6. It is possible to improve silica purity of the cylindrical intermediate member by manufacturing the high-purity silica tube 6 using such a method.

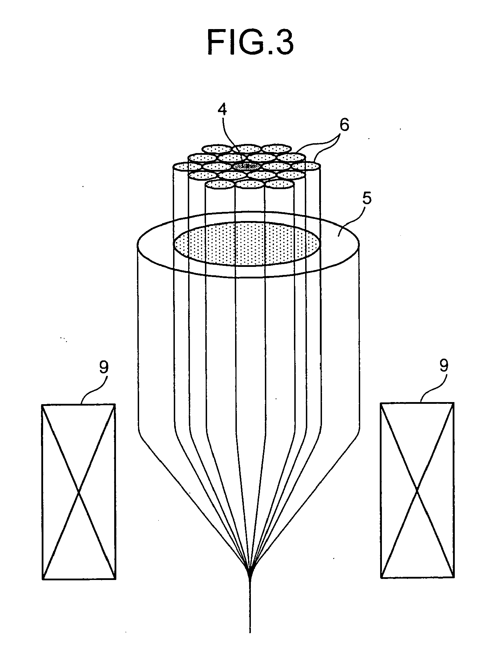

Fig. 3 is a schematic for illustrating a process in which the high-purity silica tubes 6 are bundled with a core rod 4 and drawn. A plurality of the high-purity silica tubes 6 are bundled to surround the core rod 4 arranged on a center axis of the high-purity silica tubes 6. The high-purity silica tubes 6 and core rod 4 inserted into a synthetic silica pipe 5 are drawn by a fiber-drawing furnace 9. This makes it possible to manufacture a microstructured optical fiber having a lower loss characteristic. A rod obtained by elongating a glass rod made of pure silica glass manufactured by the VAD method is used as the core rod 4. However, the core rod 4 is not specifically limited. A glass rod doped with germanium in the center on a cross section thereof may be used as the core rod 4.

When the part of the synthetic silica pipe 2 is chemically removed by etching, since both the inner side and the outer side of the cylindrical intermediate member 3 are removed, the layer deposited by the OVD method or the MCVD method is also removed by substantially the same thickness as the cylindrical intermediate member 3. Therefore, it is necessary to deposit silica excessively taking into account the removal.

As a problem of the stack-and-draw method for bundling and drawing silica pipes, when cylindrical pipes are bundled, since air gaps are formed among the pipes, contrivance for filling the air gaps is required. As a method of solving this problem, it is effective to use a high-purity silica tube having a sectional shape of a polygon such as a hexagon or a square.

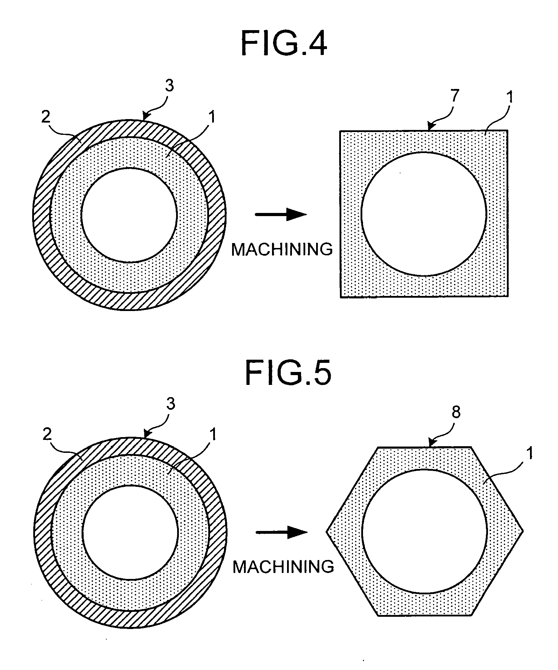

It is possible to manufacture a high-purity silica tube 7 having a square sectional shape and a high-purity silica tube 8 having a hexagonal sectional shape as shown in Figs. 4 and 5 by depositing the silica layer 1 having high purity on the inner side of the synthetic silica pipe 2 by the MCVD method, and removing the outer side including a part of the synthetic silica pipe 2 or the entire synthetic silica pipe 2 with machining so that it has a square sectional shape or a hexagonal sectional shape. In this case, etching by a chemical such as hydrogen fluoride may be used up to a stage in the middle to remove the synthetic silica pipe 2 serving as the preform. It is also possible to deposit silica having high purity on an outer side of a synthetic silica pipe by the OVD method, remove the synthetic silica pipe with etching by a chemical such as hydrogen fluoride, and form an outer side of a high-purity silica tube obtained in a polygonal shape with machining. It is possible to more easily obtain a microstructured optical fiber by forming the silica tube in a polygonal shape in section at the time of machining. In this case, it is desirable that arithmetic surface roughness Rₐ of the high-purity silica tube is equal to or lower than 0.1 µm. It is possible to control an increase in a transmission loss of the microstructured optical fiber by polishing the synthetic silica pipe until Rₐ becomes equal to or lower than 0.1 µm.

Moreover, if the synthetic silica pipe 2 is fabricated from silica doped with fluorine or phosphorus, it is possible to adjust an etching speed in chemically etching the synthetic silica pipe 2. It is also effective to dope fluorine or germanium in the OVD or MCVD deposited layer. A predetermined refractive index difference from a refractive index of pure silica glass is provided by using fluorine or germanium. Thus, it is possible to manufacture a microstructured optical fiber having a refractive index profile and degrees of freedom for fiber design can be heighten.

It is also possible to manufacture a hollow core fiber having a low loss by using the same manufacturing method as above.

Effectiveness of the manufacturing method is confirmed below based on examples. In the examples, to shift a cutoff wavelength to a shorter wavelength, trial manufacturing of a microstructured optical fiber was performed by providing holes having an identical diameter as microstructures in a cladding layer surrounding a core, arranging the holes to have a hexagonal close-packed structure, and setting a center-to-center distance A of these holes, a diameter d of the holes, and a radio d/A of the center-to-center distance A and the diameter d to 4.0 µm, 1.8 µm, and to 0.45, respectively. A layer formed by the holes was formed in a ten-layer structure to eliminate an influence of a confinement loss. First, as a comparative example, a result obtained by using a synthetic silica pipe preform having an outer diameter of 0.5 mm without change and finally drawing a bundle of the synthetic silica pipe to have a fiber diameter of 125 µm is shown in Table 1.

**Table 1 Result of trial manufacturing of a microstructured optical fiber of a cutoff short-wavelength shift type**

| Parameter | Loss | Dispersion | Slope | A_{eff} | Macro-bending loss | λ_{c} | PMD |
|---|---|---|---|---|---|---|---|
| Unit | dB/km | ps/nm/km | ps/nm² /km | µm² | dB/m (φ20 mm) | nm | ps/km^{1/2} |
| Comparative example | 4.3 | 34.9 | 0.067 | 49 | 0.3 | 613 | 0.038 |

In Table 1, a transmission loss (loss), dispersion, a dispersion slope (slope), an effective area (A_{eff}), a macro-bending loss, and a polarization mode dispersion (PMD) are values at the wavelength of 1550 nm. A cutoff wavelength refers to a fiber cutoff wavelength λ_{c} defined in International Telecommunication Union (ITU-T) G.650.1. Other terms not specifically defined in this specification shall comply with the definition and the measurement method in ITU-T G.650.1.

By providing the microstructures as indicated by Table 1, an optical fiber that had an effective core area A_{eff} as large as 49 µm² and a cutoff wavelength of which shifted to the shorter wavelength was successfully manufactured. For example, it is possible to perform transmission in an ultra-wide band by using this optical fiber. Since the dispersion at the wavelength of 1550 nm is large and the macro-bending loss at the wavelength is small, it is also possible to use the optical fiber as a dispersion compensating fiber for a negative dispersion transmission line. However, the transmission loss was as large as about 4.3 dB/km. Subsequently, trial manufacturing was performed using the manufacturing method explained in the embodiment. A fiber structure was a concentric circle structure of holes whose diameter and intervals same as those in the comparative example.

As an example of the manufacturing method, a silica layer was deposited on an inner circumferential surface of a synthetic silica pipe having an outer diameter of 24 mm and an inner diameter of 20 mm by the MCVD method. A cylindrical intermediate member having an outer diameter of 24 mm and an inner diameter of 5 mm was manufactured. An inner circumferential surface and an outer circumferential surface of this cylindrical intermediate member were etched by hydrogen fluoride to obtain a high-purity silica tube having an outer diameter of 20 mm and an inner diameter of 9 mm.

As another example of the manufacturing method, a silica layer was deposited on an outer circumferential surface of a synthetic silica pipe preform having an outer diameter of 8 mm and an inner diameter of 5 mm by the OVD method. A cylindrical intermediate member having an outer diameter of 24 mm was manufactured. The cylindrical intermediate member was etched by hydrogen fluoride in the same manner as above to obtain a high-purity silica tube having an outer diameter of 20 mm and an inner diameter of 9 mm.

The high-purity silica tubes obtained in these methods were extended to have an outer diameter of 0.5 mm, bundled in the same manner as above, and drawn to have a fiber diameter of 125 µm. In the examples, the high-purity silica tubes were elongated once and, then, drawn. However, the elongation step may be omitted to directly bundle and draw the high-purity silica tubes. Characteristics of optical fibers obtained are described in Table 2 below. In an example 1, the MCVD method was used as a silica deposition method. In an example 2, the OVD method was used as a silica deposition method.

**Table 2 Result of trial manufacturing of the microstructured optical fiber by the manufacturing method according to the present invention**

| Parameter | loss | Dispersion | slope | A_{eff} | Macro-bending loss | λ_{c} | PMD |
|---|---|---|---|---|---|---|---|
| Unit | dB/km | ps/nm/km | ps/nm² /km | µm² | dB/m (φ20 mm) | nm | ps/km^{1/2} |
| Example 1 (MCVD) | 0.73 | 32.7 | 0.066 | 50 | 0.2 | 633 | 0.048 |
| Example 2 (OVD) | 0.81 | 33.8 | 0.067 | 49 | 0.5 | 607 | 0.056 |

As indicated by the examples 1 and 2 shown in Table 2, a transmission loss at a wavelength of 1550 nm was successfully controlled to 1.0 dB/km or less while characteristics substantially the same as those of the optical fiber in the comparative example that used the synthetic silica pipe preform without change were maintained. It is considered that the loss can be further reduced through optimization of a manufacturing process. The structures adopted in the examples are merely examples. Other structures may be adopted as long as the low loss effect is obtained using the same method. Further, although hydrogen fluoride is used in this example, other chemicals or machining may be used. Even if only a part of glass is removed, since an average quality of the glass is improved, a predetermined low loss effect is obtained.

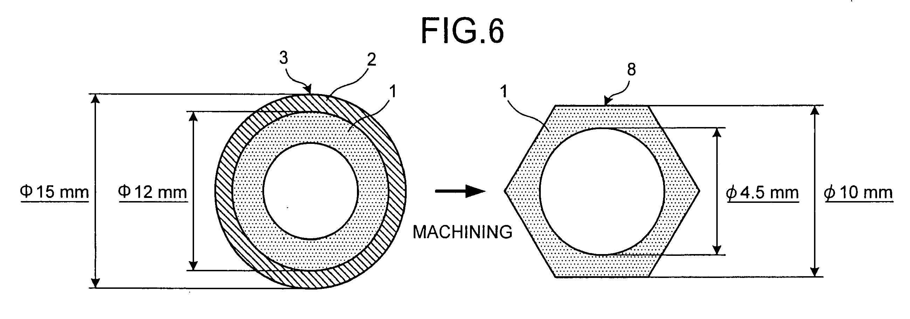

As another example of manufacturing, to obtain hole intervals same as those in the example, a silica layer was deposited on an inner side of a synthetic silica pipe serving as a preform by the MCVD method and the synthetic silica pipe was machined to have a sectional shape of a regular hexagonal. Fig. 6 is a schematic for illustrating a process in which the outer circumferential surface of the cylindrical intermediate member 3 is actually machined into the hexagonal shape in cross section according to the present embodiment. The outer circumferential surface of the cylindrical intermediate member 3 having an outer diameter of 15 mm and an inner diameter of 4.5 mm, which was obtained by depositing the silica layer 1 on the synthetic silica pipe 2 serving as the preform by the MCVD method, was polished by machining to manufacture the high-purity silica tube 8 having a sectional shape of a regular hexagon. A plurality of the high-purity silica tubes 8 were densely bundled and drawn to obtain a microstructured optical fiber. Characteristics of the optical fiber obtained were substantially the same as those of the optical fiber described above. A transmission loss at the wavelength of 1550 nm was 0.71 dB/km. This means that a low loss effect higher than that in the method described above was obtained.

According to the present invention, there is an effect that it is possible to increase purity of silica in a microstructure part and, thus, it is possible to manufacture a microstructured optical fiber having a low transmission loss.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A method of manufacturing a microstructured optical fiber, the method comprising:
depositing a first silica material having a higher purity than a cylindrical preform formed of a second silica material on at least one of an inner side and an outer side of the preform to fabricate a cylindrical intermediate member;
removing a part of the cylindrical intermediate member including at least a part of the preform to fabricate a high-purity silica tube;
bundling a plurality of the high-purity silica tubes with a core rod arranged at a center axis of a bundle of the high-purity silica tubes; and
drawing the bundle of the high-purity silica tubes with the core rod arranged at the center axis.

2. The method according to claim 1, wherein
the removing includes
removing at least a part of the preform by machining; and
machining the preform into a polygonal shape in cross section so that the high-purity silica tubes are bundled without a gap, and
the bundling includes bundling the high-purity silica tubes without a gap.

3. The method according to claim 1, wherein
the removing includes removing at least a part of the preform by etching.

4. The method according to claim 1 to 3, wherein
at least one of fluorine and phosphorus is doped in the preform.

5. The method according to claim 1 to 4, wherein
at least one of fluorine and germanium is doped in the first silica material.
